# EUROPÄISCHE PATENTSCHRIFT

(11) **EP 2 106 693 B1**
(45) Veröffentlichungstag und Bekanntmachung des Hinweises auf die Patenterteilung: **07.06.2017**
(21) Anmeldenummer: 09003794.6
(22) Anmeldetag: 17.03.2009
(51) Int. Cl.: A01K 7/00

(54) **Tränkeeinrichtung**
Drinking device
Abreuvoir

(30) Priorität: 03.04.2008 DE 102008017486
(43) Veröffentlichungstag der Anmeldung: 07.10.2009
(73) Patentinhaber: Suevia Haiges GmbH, 74366 Kirchheim/Neckar (DE)
(72) Erfinder: Haiges, Frank, 74366 Kirchheim/Neckar (DE)
(74) Vertreter: Bartels & Partner

(56) Entgegenhaltungen:
- DE-C- 915 515
- DE-U1- 29 509 070
- GB-A- 683 913
- US-A- 1 824 116
- US-A- 2 585 547
- US-A- 5 174 245

## Beschreibung

Die Erfindung betrifft eine Tränkeeinrichtung mit den Merkmalen im Oberbegriff von Anspruch 1.

Einrichtungen dieser Art werden weit verbreitet als von Nutztieren, insbesondere Großvieh, bedarfsweise betätigbare Tränken eingesetzt. Hierfür ist die Versorgungseinrichtung mit einem die Wasserzufuhr steuernden Rohrventil versehen, das normalerweise in die Schließstellung vorgespannt ist, jedoch von dem die Tränke benutzenden Tier in die offene Stellung gebracht werden kann, wenn das Maul des Tieres in das Becken eintaucht.

Um Beschädigungen des Tränkebeckens durch das Anstoßen der sich annähernden Tiere, beispielsweise durch Anstoßen von Horntieren mit dem Gehörn, zu vermeiden, werden Tränkebecken üblicherweise in stabiler Bauweise aus entsprechend festen Werkstoffen hergestellt.

Die US 1 824 116 beschreibt eine Tränkeeinrichtung mit einem Tränkebecken, das mit einer Versorgungseinrichtung, insbesondere für Wasser, ausgestattet ist, wobei ein Teil des Außenumfanges des Tränkebeckens durch einen Schutzmantel eingefasst ist, wobei der Schutzmantel durch einen Bügel aus Flachstahl gebildet ist, wobei ein die Halterung der Versorgungseinrichtung bildender Träger vorhanden ist, mit dem das Tränkebecken und der Flachstahlbügel verbunden sind, und wobei die Öffnung des Tränkebeckens oder der zugeordnete Rand des Flachstahlbügels einen nach innen eingezogenen, einen Überhang an der Öffnung des Tränkebeckens bildenden Umfangsrand aufweist.

Weitere Tränkeeinrichtungen gehen aus der US 5 174 245, der GB 683 913, der US 2 585 547, der DE29509070U und der DE 915 515 C hervor.

Im Hinblick auf diesen Stand der Technik stellt sich die Erfindung die Aufgabe, eine Tränkeeinrichtung zur Verfügung zu stellen, die sich bei einfacher und kostengünstiger Bauweise durch eine verbesserte Sicherheit gegen Beschädigungen des Tränkebeckens auszeichnet.

Erfindungsgemäß ist diese Aufgabe durch eine Tränkeeinrichtung gelöst, die die Merkmale des Patentanspruches 1 in seiner Gesamtheit aufweist.

Gemäß dem Anspruch 1 ist vorgesehen, dass sich der den Überhang bildende Umfangsrand durchgehend erstreckt, abgesehen von dem dem Träger benachbarten Bereich, in dem sich ein Betätigungs- und Auslaufrohr einer Ventil-Armatur der Versorgungseinrichtung in das Becken erstreckt.

Dadurch, dass demgemäß für die Außenseite des Tränkebeckens ein Schutzmantel vorgesehen ist, sind die Anforderungen, die an die Festigkeit des Tränkebeckens selbst zu stellen sind, verringert. Somit eröffnet sich die Möglichkeit, kostengünstige Werkstoffe für das Tränkebecken zu benutzen, beispielsweise Kunststoffmaterialien oder Keramiken, also Werkstoffe, die gegenüber metallischen Werkstoffen nicht nur billiger sind, sondern insbesondere auf einfache Weise formbar sind, so dass auch der Herstellungsaufwand wesentlich verringert ist.

Bei er Erfindung ist der Schutzmantel durch einen Bügel aus Flachstahl gebildet.

Erfindungsgemäß ist ein die Halterung der Versorgungseinrichtung bildender Träger sowohl mit dem Tränkebecken als auch dem Flachstahlbügel verbunden. In vorteilhafter Weise bildet der Flachstahlbügel hierbei nicht nur einen Schutz für den Seitenrand des Beckens, sondern auch ein Teilelement der Verbindung zwischen Tränkebecken und Träger.

Hierbei kann die Anordnung so getroffen sein, dass der Träger seitlich von der Versorgungseinrichtung Halteflügel aufweist, an denen jeweils eine Verbindungsstelle vorgesehen ist, an denen der Flachstahlbügel und das Tränkebecken derart fixiert sind, dass zwischen diesem und dem zwischen den Halteflügeln befindlichen Teil des Trägers ein Freiraum gebildet ist. Dieser kann der Aufnahme der Wasserzuleitung dienen und ermöglicht den bequemen Einbau von Ventil-Armaturen.

Vorzugsweise weist das Tränkebecken die Form einer gerundeten Schale mit außenseitig im wesentlichen flacher Seitenwand auf, an der der Flachstahlbügel im vom Träger abgewandten Bereich zwischen den Verbindungsstellen mit den Halteflügeln des Trägers anliegt.

Wenn der Flachstahlbügel außer den Verbindungsstellen mit den Halteflügeln des Trägers eine weitere Verbindungsstelle zum Tränkebecken hin aufweist, ist eine besonders sichere Halterung des Tränkebeckens gewährleistet.

Bei besonders vorteilhaften Ausführungsbeispielen ist die Anordnung so getroffen, dass die Öffnung des Tränkebeckens oder der zugeordnete Rand des Flachstahlbügels einen nach innen eingezogenen, einen Überhang an der Öffnung des Tränkebeckens bildenden Umfangsrand aufweist. Dadurch ist die Öffnung des Tränkebeckens von einem Anti-Schleckrand eingefaßt, wodurch Wasserverluste über den Beckenrand wirksam vermindert sind.

Wie bereits bemerkt, ermöglicht der mechanische Schutz am Außenumfang des Tränkebeckens die Benutzung kostengünstiger Werkstoffe für das Tränkebecken, beispielsweise aus UV-beständigem Kunststoff. Hierbei kann ein PE-Material vorgesehen sein, wobei die Formgebung durch Rotationsformen erfolgen kann.

Nachstehend ist die Erfindung anhand eines in der Zeichnung dargestellten Ausführungsbeispieles im Einzelnen erläutert. Es zeigen:
- Fig. 1: eine perspektivische Schrägansicht des Ausführungsbeispieles der erfindungsgemäßen Tränkeeinrichtung; und
- Fig. 2, 3 und 4: eine Seitenansicht, bzw. eine Draufsicht, bzw. eine Vorderansicht des Ausführungsbeispieles.

In den Fig. ist ein Träger als Ganzes mit 1 bezeichnet, der aus plattenförmigem, metallischem Werkstoff einstückig ausgebildet ist. Der Träger 1 weist einen ebenflächigen Zentralteil 3 mit rechteckförmigen Umriß auf, von dessen beiden Seiten sich Halteflügel 5 erstrecken, die gegenüber dem Zentralteil 3 stumpfwinklig abgebogen sind, so dass die Halteflügel 5 zueinander divergierende Ebenen bilden. Die Halteflügel 5 sind im Umriß in etwa dreieckförmig.

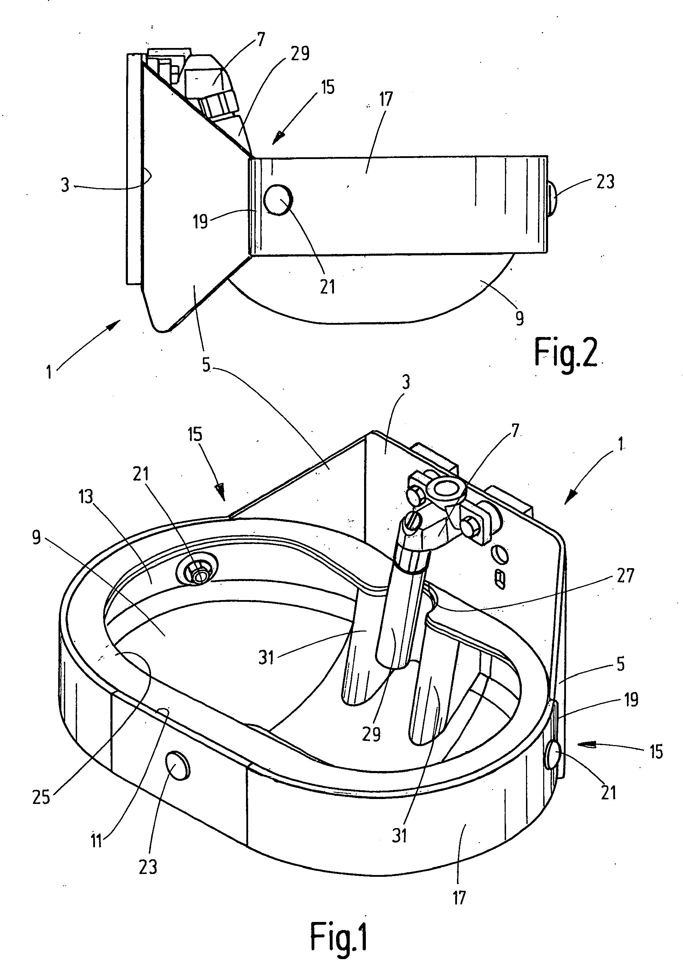

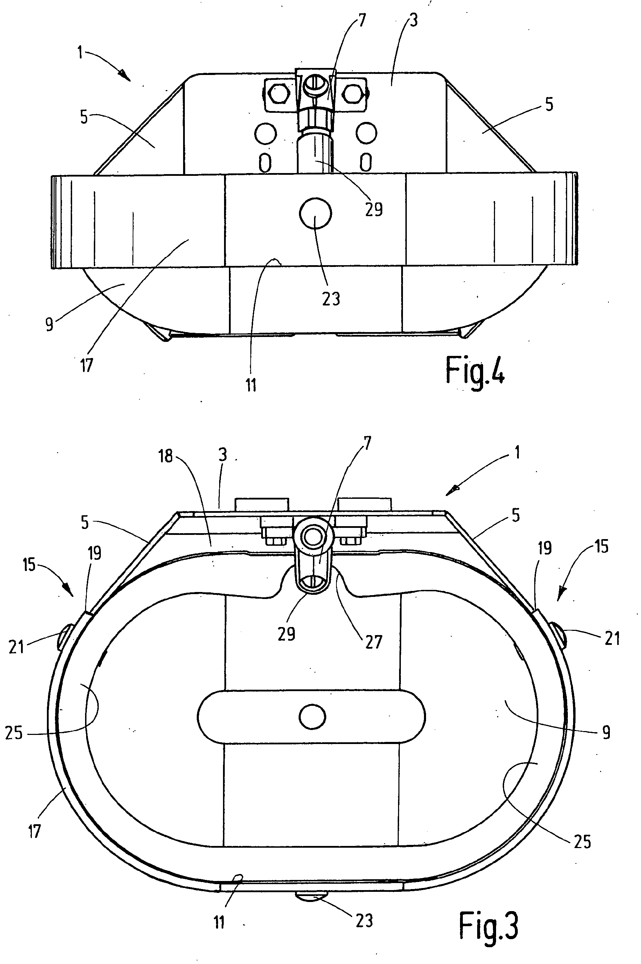

Der Zentralteil 3 bildet die Lagerung für eine Ventil-Armatur 7, die in der bei Tränkeeinrichtungen üblichen Weise ausgebildet ist, so dass sich eine nähere Beschreibung erübrigt. Die Halteflügel 5 bilden die Verbindung eines Tränkebeckens 9 mit dem Träger 1. Das Becken 9 besitzt eine Schalenform, die an den den Enden der Halteflügel 5 benachbarten Seiten halbkreisförmig gerundet ist, wobei sich zwischen diesen gerundeten Seiten ein geradliniger Abschnitt 11 (Fig. 3) der Seitenwand 13 (Fig. 1) des Tränkebeckens 9 erstreckt.

Die Enden der Halteflügel 5 bilden jeweils Verbindungsstellen 15 für die Anbringung des Beckens 9 über die Flügel 5 am Träger 3. Dabei erfolgt die Verbindung nicht unmittelbar zwischen den Halteflügeln 5 und dem Becken 9, sondern in der Weise, dass die Enden der Flügel 5 mit einem Flachstahlbügel 17 an Schweißstellen 19 verschweißt sind. Der Flachstahlbügel 17 seinerseits ist über Schrauben 21 mit der Seitenwand 13 des Beckens 9 verbunden. Die Länge der Halteflügel 5, d.h. der Abstand zwischen dem Zentralteil 3 des Trägers 1 und der benachbarten Seitenwand 13 des Beckens 9, ist so gewählt, dass dazwischen ein Freiraum 18 für die Wasserzuleitung und den Einbau der Ventil-Armatur 7 gebildet ist.

Der Flachstahlbügel 17 liegt als Schutzmantel an der Außenseite der ebenen Seitenwand 13 des Beckens 9 an, und zwar über den gesamten, vom Träger 3 abgewandten Außenumfang der Seitenwand 13 zwischen den Verbindungsstellen 15. Am geradlinigen Abschnitt 11 ist eine weitere Schraube 23 als Verschraubung zwischen dem Flachstahlbügel 17 und dem Becken 9 vorgesehen.

Wie am besten aus Fig. 1 und 3 zu ersehen ist, weist die freie Öffnung des Tränkebeckens 9 einen nach innen eingezogenen Umfangsrand 25 auf, der einen Überhang an der Öffnung des Tränkebeckens 9 bildet. Dieser Überhang dient als Anti-Schleckrand, der einen Wasserverlust über den Öffnungsrand hinweg vermindert, wenn ein das Becken 9 benutzendes Tier mit Zunge oder Kopf planschende Bewegungen im Becken 9 ausführt. Der den Überhang bildende Umfangsrand 25 erstreckt sich durchgehend, abgesehen von dem dem Träger 1 benachbarten Bereich, in dem sich ein Betätigungs- und Auslaufrohr 29 der Ventil-Armatur 7 in das Becken 9 erstreckt. Seitlich des Rohres 29 bildet die Seitenwand 13 des Beckens 9, was lediglich in Fig. 1 sichtbar ist, nach innen vorspringende Wülste 31 als seitlichen Schutz für das Rohr 29.

Während bei dem gezeigten Beispiel der den Überhang bildende Umfangsrand 25 durch Formgebung des Öffnungsrandes des Beckens 9 selbst gebildet ist, könnte der Flachstahlbügel 17 mit einem nach innen umgelegten oberen Rand den ins Innere des Beckens ragenden Überhang als Anti-Schleckrand bilden.

## Patentansprüche

1. Tränkeeinrichtung mit einem Tränkebecken (9), das mit einer Versorgungseinrichtung (7, 29), insbesondere für Wasser, ausgestattet ist, wobei zumindest ein Teil des Außenumfanges des Tränkebeckens (9) durch einen Schutzmantel (17) eingefasst ist, wobei der Schutzmantel durch einen Bügel (17) gebildet ist, und wobei die Öffnung des Tränkebeckens (9) oder der zugeordnete Rand des Bügels (17) einen nach innen eingezogenen, einen Überhang an der Öffnung des Tränkebeckens (9) bildenden Umfangsrand (25) aufweist, wobei sich der den Überhang bildende Umfangsrand (25) durchgehend erstreckt, abgesehen von dem einem Träger (1) benachbarten Bereich (27), in dem sich ein Betätigungs- und Auslaufrohr (29) einer Ventil-Armatur (7) der Versorgungseinrichtung in das Becken (9) erstreckt, **dadurch gekennzeichnet, dass** der Schutzmantel (17) aus Flachstahl gebildet ist und dass ein die Halterung der Versorgungseinrichtung (7, 29) bildender Träger (1) vorhanden ist, mit dem das Tränkebecken (9) und der Flachstahlbügel (17) verbunden sind.

2. Tränkeeinrichtung nach Anspruch 1, **dadurch gekennzeichnet, dass** der Träger (1) seitlich von der Versorgungseinrichtung (7, 29) Halteflügel (5) aufweist, an denen jeweils eine Verbindungsstelle (15) vorgesehen ist, an denen der Flachstahlbügel (17) und das Tränkebecken (9) derart fixiert sind, dass zwischen diesem und dem zwischen den Halteflügeln (5) befindlichen Teil (3) des Trägers (1) ein Freiraum (18) gebildet ist.

3. Tränkeeinrichtung nach Anspruch 2, **dadurch gekennzeichnet, dass** das Tränkebecken (9) die Form einer gerundeten Schale mit außenseitig im wesentlichen flacher Seitenwand (13) aufweist, an der der Flachstahlbügel (17) im vom Träger (1) abgewandten Bereich zwischen den Verbindungsstellen (15) mit den Halteflügeln (5) des Trägers (1) anliegt.

4. Tränkeeinrichtung nach Anspruch 3, **dadurch gekennzeichnet, dass** der Flachstahlbügel (17) außer den Verbindungsstellen (15) mit den Halteflügeln (5) des Trägers (1) mindestens eine weitere Verbindungsstelle (23) zum Tränkebecken (9) hin aufweist.

5. Tränkeeinrichtung nach einem der Ansprüche 1 bis 4, **dadurch gekennzeichnet, dass** das Tränkebecken (9) aus UV-beständigem Kunststoff gefertigt ist.

## Claims

1. A watering device comprising a watering basin (9) that is equipped with a supply device (7, 29), in particular for water, at least a part of the outer circumference of the watering basin (9) being enclosed by a protective casing (17), the protective casing being formed by a bracket (17) and the opening of the watering basin (9) or the assigned edge of the bracket (17) having an inwardly draw in peripheral edge (25) that forms an overhang at the opening of the watering basin (9), the peripheral edge (25) forming the overhang extending continuously apart from the region (27) adjacent to the one support (1) in which an actuation and discharge pipe (29) of a valve fitting (7) of the supply device extends into the basin (9), **characterised in that** the protective casing (17) is formed from flat steel and that a support (1) forming the holder of the supply device (7, 29) is provided to which the watering basin (9) and the flat steel bracket (17) are connected.

2. The watering device according to Claim 1, **characterised in that** the support (1) has holding arms (5) to the sides of the supply device (7, 29) on which a connection point (15) is respectively provided to which the flat steel bracket (17) and the watering basin (9) are affixed such that between the latter and the part (3) of the support (1) located between the holding arms (5) a free space (18) is formed.

3. The watering device according to Claim 2, **characterised in that** the watering basin (9) is in the form of a rounded shell with a substantially flat side wall (13) on the outside against which the flat steel bracket (17) rests in the region facing away from the support (1) between the connection points (15) to the holding arms (5) of the support (1).

4. The watering device according to Claim 3, **characterised in that** the flat steel bracket (17) has at least one further connection point (23) to the watering basin (9) in addition to the connection points (15) to the holding arms (5) of the support (1).

5. The watering device according to any of Claims 1 to 4, **characterised in that** the watering basin (9) is produced from UV-resistant plastic.

## Revendications

1. Abreuvoir comprenant un bassin (9), équipé d'un dispositif (7, 29) d'alimentation, notamment pour de l'eau, dans lequel au moins une partie du pourtour extérieur du bassin (9) est bordée par une enveloppe (17) de protection, l'enveloppe de protection étant formée par un étrier (17), l'ouverture du bassin (9), ou le bord associé de l'étrier (17), ayant un bord (25) périphérique rentré vers l'intérieur et formant un surplomb de l'ouverture du bassin (9), dans lequel le bord (25) périphérique formant le surplomb s'étend d'une manière continue, à l'exception d'une région (27) voisine d'un support (1), région dans laquelle un tuyau (29) d'actionnement et de sortie d'un robinet (7) du dispositif d'alimentation s'étend dans le bassin (9), **caractérisé en ce que** l'enveloppe (17) de protection est en un acier plat et **en ce qu'**un support (1), formant la fixation du dispositif (7, 29) d'alimentation, est présent, support auquel le bassin (9) et l'étrier (17) en acier plat sont reliés.

2. Abreuvoir suivant la revendication 1, **caractérisé en ce que** le support (1) a, latéralement au dispositif (7, 29) d'alimentation, des ailes (5) de maintien, sur lesquelles est prévu respectivement un point (15) de liaison où l'étrier (17) en acier plat et le bassin (9) sont immobilisés, de manière à former un espace (18) libre entre celui-ci et la partie (3) du support (1) se trouvant entre les ailes (5) de maintien.

3. Abreuvoir suivant la revendication 2, **caractérisé en ce que** le bassin (9) a la forme d'une cuvette arrondie, ayant, du côté extérieur, une paroi (13) latérale sensiblement plate, à laquelle l'étrier (17) en acier plat s'applique dans la région éloignée du support (1), entre les points (15) de liaison, aux ailes (5) de maintien du support (1).

4. Abreuvoir suivant la revendication 3, **caractérisé en ce que** l' (17) en acier plat a, à l'extérieur des points (15) de liaison, aux ailes (5) de maintien du support (1), au moins un autre point (23) de liaison au bassin (9).

5. Abreuvoir suivant la revendication 1 à 4, **caractérisé en ce que** le bassin (9) est en une matière plastique résistante aux UV.
